# EUROPEAN PATENT APPLICATION

(11) **EP 3 991 548 A1**
(43) Date of publication of application: **04.05.2022**
(21) Application number: 20204782.5
(22) Date of filing: 29.10.2020
(51) Int. Cl.: A01K 5/01, A01K 1/015

(54) **LONG TROUGH, FLOOR PANEL, SYSTEM THEREOF AND METHOD OF INSTALLING THE LONG TOUGH**

(71) Applicant: Polysan A/S, 5672 Broby (DK)
(72) Inventor: SØRENSEN, Villy Juhl, 7430 Ikast (DK); FOLDAGER, Kenn Risom, 7451 Sunds (DK)
(74) Representative: Patrade A/S

(57) **Abstract**

The invention relates to a long trough comprising a plurality of trough elements (27) made polymer concrete, each having a first supporting foot (28) and a second supporting foot (29). The first and second supporting feet project beyond a bottom surface (37) of the trough element and are configured to be positioned in a first and a second recess (21, 22) on the floor panels (16). The trough elements are secured to the floor panels by applying a cement based filler material (34) to the spacing between the supporting feet and the recess.

## Description

### Field of the Invention

The present invention relates to a long trough for mounting under a partitioning between two pens, formed by at least one trough element extending in a longitudinal direction, wherein the long trough comprises a first end, an opposite second end, a top side, a bottom side and opposite sides.

The present invention further relates to a floor panel for use in combination with the above long trough, wherein the floor panel extends in a longitudinal direction between opposite ends and further in a width direction between opposite sides.

The present invention also relates to a system comprising the above long trough and the above floor panels, and a method of installing the long trough.

### Background of the Invention

It is known to cast trough elements in polymeric concrete and joint these together to form a long trough. The long trough is typically positioned below a partitioning separating two pens so that the animals within both pens can eat from both sides of the same trough. The long trough may also be positioned along a wall of the try so that only the animals within the same pen can eat from the trough. An example of such a long trough is disclosed by the applicant in WO 2015/086031 A1.

EP 1680956 B1 discloses alternative embodiment where the long trough is arranged in a recess formed on a separate supporting element made on concrete. Each side of the trough elements is designed to face a matching side surface of the recess where the bottom part is formed as a solid block resting on the bottom of the recess. The supporting element has a sloping thickened section comprising the recess and a thin horizontal section adjoining a slatted floor.

DK 180244 B1 discloses a similar alternative embodiment where the bottom of the trough element has a dovetail shape and the recess has a corresponding dovetail shape for receiving the trough elements. In this embodiment, the through elements are slid onto a supporting element made of concrete from one end and a filler material is applied to the gaps between the recess and the trough elements at an offsite facility. After assembly, the supporting element with trough elements is transported to the site and lifted into position inside the stable. Floor panels are subsequently arranged on either sides of the supporting element to form the slatted floor.

The supporting element in both EP 1680956 B1 and DK 180244 B1 acts as a raised platform for the long trough and not a floor panel. The use of such supporting elements increases the total components needed to install the long trough, thereby increasing the total costs. Further, such supporting elements also require the use of a crane to position the respective elements.

It is also known that the trough elements may be secured directly to a slatted floor using fasteners, such as screws or bolts. The trough elements may also be secured to the slatted floor using brackets and anchors. Such trough elements typically comprise a bottom block with integrated side platforms projecting from each side of the bottom block. The side platforms and the bottom block together form a flushed continuous surface for contacting the top surface of the slatted floor.

The long trough is typically installed by placing a set of fixing elements on the floor, applying a cement-based mortar or an epoxy based glue onto the floor between the fixing elements, positioning the trough elements on the mortar or glue to form the long trough, and further applying mortar or glue along at least a portion of the sides of the trough elements. Once the mortar or glue is cured, the fixing elements are removed. However, this installation process is both time consuming and expensive. Furthermore, this solution does not allow for an easy replacement of the trough elements as the existing mortar first has to be removed which is both costly and time consuming. Using the above installation process, installation of a long trough of 6 meters typically takes about 90 - 120 minutes.

For many years there has thus been a desire to make the production more efficient and at the same time avoid the problems and the time consumption associated with the installation of prior art long troughs.

### Object of the Invention

It is an object of the invention to provide a long trough, floor panel, system and method that overcomes the drawbacks of the prior art systems.

It is also an object of the invention to provide a long trough, floor panel, system and method that allows for a quick and simple installation of a long trough.

It is also an object of the invention to provide a long trough, floor panel, system and method that reduces the total costs of a long trough.

### Description of the Invention

One object is achieved by a long trough for mounting between two pens, extending in a longitudinal direction from a first end to a second end, further in a width direction from a first side to a second side, and further in a height direction from a top side to a bottom side and opposite sides, wherein the long trough is formed by at least one trough element made of polymer concrete, each trough element further has a bottom surface and at least one supporting foot projecting from an outer surface of that trough element, the at least supporting foot extends in the longitudinal direction, wherein said at least one supporting foot projects beyond the bottom surface in the height direction and is configured to be positioned in at least one recess on at least one slatted floor panel, when installed, so that the at least one supporting foot is resting on a bottom of the at least one recess.

The present invention provides an improved long trough design that allows for a fast and simple installation onsite compared with conventional installation processes. With the present long trough design the need for additional supporting elements, as mentioned in EP 1680956 B1 and DK 180244 B1, is eliminated and thus less components are needed to install the long trough. Further, the present long trough design does not require a lot of casting to secure the individual trough elements to the floor. Thereby, the total costs and installation time can be reduced significantly.

Compared with the conventional installation process, the installation time for a long trough of 6 metres with the present design can be reduced to about 15 minutes. Further, the trough elements can be positioned without the use of a crane.

The trough element has a body profile extending in a length direction, a width direction and further in a height direction. The body defines an inner surface and an outer surface connected by a first side edge and a second side edge. The trough element further has an open top side and a bottom side intended to face the floor when installed. The first side edge forms part of a first side of the trough element while the second side edge forms part of a second side of the trough element.

According to one embodiment, the at least one supporting foot has a free end surface and a local height measured between said bottom surface and said free end surface, wherein said local height is greater than a local depth of said recess of the at least one floor panel.

In the present long trough design, the supporting feet project outwards from the outer surface of the trough element and further beyond the bottom side of the trough element. The bottom side may be shaped by a bottom block defining a bottom surface, e.g. a continuous flat surface extending in the width direction and also in the length direction. Alternatively, the bottom side may be shaped by an outer surface of a body of the trough element, preferably extending between a first and a second supporting foot of the trough element. Alternatively, the outer surface may follow the profile of the inner surface of the trough element and e.g. have a curved and/or straight surface profile. This potentially saves further material and costs, and also reduces the total weight of the trough elements which allows for an easier handling.

Each supporting foot of the trough element may have a free end surface, e.g. parallel to the above bottom surface. The end surface and bottom surface together define a local height of the supporting foot. The local height may be selected so that the trough element is equal to or greater than a local depth of a recess on the below floor panel. Preferably, the local height is greater than the local depth so that trough element is resting only on the supporting feet. Thereby, a spacing may be formed between the bottom surface and an adjacent top surface of the floor panel.

The spacing between the bottom surface and the top surface may be selected between 1 mm to 40 mm. The local height of the supporting element may be selected between 10 mm to 40 mm.

In conventional trough designs, as illustrated in DK 180244 B1, the bottom side may be shaped as a solid block defining a continuous bottom surface. However, this design forms a heavy piece requiring additional material during manufacturing. Cut-outs may be formed in the bottom surface to save weight and reduce costs, as also illustrated in DK 180244 B1. In this conventional design, the free ends of the supporting feet are aligned with the bottom surface of the central block so the trough element is resting on both the supporting feet and the central block. Thus majority of the loads are transferred via the central block to the floor.

According to one embodiment, a first supporting foot is arranged on said first side of the at least one trough element and a second supporting foot is arranged on said second side of the at least one trough element.

Preferably, the trough element has a first supporting foot arranged at the first side and a second supporting foot arranged at the second side. The first and second supporting feet extend in the height direction and further in the length direction. The first and second supporting feet may be formed as a continuous foot or as multiple feet in the length direction. The first and second supporting feet may be spaced apart by a predetermined distance measured at the free ends, where said distance may be less than the width of the trough element measured between the first and second side edges. This enabling loads to be transferred via the supporting feet to the floor.

The first and second supporting feet may each have a straight or curved profile in the height direction. Preferably, the first and second supporting feet are arranged perpendicularly or at an angle relative to a central height axis. Optionally, the first and second supporting feet may be mirrored around the central height axis. However, the profile and placement of each supporting foot may vary depending on the desired design of the long trough.

Alternatively or additionally, the first and/or second support foot may have a constant thickness measured in the width direction along its height, or the thickness may vary from the outer surface to the free end surface. This allows for an optimal load transfer.

According to one embodiment, the at least one trough element comprises at least one wall element extending in the width direction, wherein the at least one trough element and said at least one wall element are integrated together to form a single piece.

The trough elements are preferably made of concrete, but could also be made of plastics or steel. Preferably, the trough elements are made of polymer concrete which has an increased structural strength and increases water resistance compared to conventional concrete. Further, the use of polymer concrete increases the product life and provides a more cleaning friendly surface.

The present trough design allows the trough elements to be casted as a single piece, thus no subsequently attachment of end walls or intermediate walls are needed. The end walls and/or the intermediate walls of the long trough may thus be integrally formed with the sides and bottom of the respective trough elements. The placement of the intermediate walls may be adapted to the desired design of the long trough, one trough element may comprise an end wall and optionally an intermediate wall while other trough elements may comprise one or more intermediate walls, or no walls at all. This allows for an improved manufacturing and reduces the total costs.

According to one embodiment, at least one mounting element is integrally formed in or embedded in said at least one wall element, wherein said at least one mounting element is configured for mounting of a partitioning, a post, a stabilator, an end element or a component thereof.

During manufacturing, one or more mounting elements may be integrally formed in one or more of the end walls and/or intermediate walls. Dummy elements may be used during manufacturing to form the respective mounting elements, such as mounting holes, cutting lines for removal of material, negative impression of a portion of a component, recess for partly or fully receiving a component, and so on. One or more mounting elements may also be embedded in one or more of the end walls and/or intermediate walls. Dedicated mounting elements, e.g. brackets, fixtures or inserts, may be embedded in the wall element during manufacturing. This allows the trough elements to be prepared for mounting of partitioning elements, posts, stabilators or components thereof. The stabilators may be configured to add stability to the partitioning. This also allows the trough elements to be prepared for mounting of end brackets, end elements, or components thereof. The end bracket may be a floor bracket or a wall bracket. The end element may be an end wall, a gate, or other components thereof.

Preferably, the end walls and/or intermediate walls may have an increased local thickness compared to the local thickness of the respective side walls of the trough element. The end wall and/or intermediate wall may optionally be integrated with the side walls to form a single piece. This provides additional strength and durability to the wall element. This also reduces the risk of failures occurring at the mounting elements.

Furthermore, the end wall and/or intermediate wall may further have a raised profile extending beyond the first and second side edges, where a recess is formed in the top surface of this raised profile. This allows for an easy positioning of the respective partitioning elements relative to the long trough.

One object is also achieved by a slatted floor panel configured to form part of a slatted floor and configured to interact with the long trough described above, the slatted floor panel extends in a longitudinal direction from a first end to a second end and further in a width direction from a first side to a second side, the slatted floor panel further has a top side and a bottom side, wherein the slatted floor panel comprises at least one end area and a plurality of slots extending from said top side to said bottom side, wherein at least one recess extending in the width direction is arranged in said at least one end area or at least one recess extending in the longitudinal direction is arranged in a side area, wherein said at least one recess is positioned at a distance from the first or second end or the first or second side and is configured to receive the at least one supporting foot of the long trough.

The present invention also provides an improved floor panel that allows for a fast and simple onsite positioning of the respective trough elements of the above long trough. The recesses are used as guidance means for positioning the trough elements, this eliminates the need for additional fixing or guidance elements. Minor adjustments of the position of the trough element may be made after the supporting feet are positioned within the recesses.

The floor panel is preferably a slatted floor panel having a rectangular or square shaped profile. The floor panel may also have other profile, e.g. an arc segment. The floor panel may alternatively comprise one or more local sub-sections with an alternative profile than the rest of the floor panel, e.g. a curved end surface and/or a curved side surface. The floor panels may thus be manufactured according to predetermined standards or be manufactured to fit the layout of the stable or housing unit.

One or more dimensions of the recess, e.g. width and/or length, are greater than the corresponding dimension(s) of the supporting foot, e.g. thickness and/or length. Preferably, at least the local width of the recess measured at the top surface may be greater than the local thickness of the supporting foot. Thereby forming a spacing between the recess and the supporting foot. The recess may thus be configured to only receive the supporting foot. This allows for an easy insertion or removal of the trough elements in the height direction, no need to slide the respective trough elements into position as described in DK 180244 B1. The present invention also allows the trough elements to be installed directly onto the floor panels, this eliminates the need for additional supporting elements as mentioned in DK 180244 B1.

According to one embodiment, the at least one recess has a bottom surface and a side surface located towards the slots, wherein said side surface is arranged perpendicular or in acute angle relative to the bottom surface.

The recess may extend partly or fully in the width direction of the floor panel and may have a bottom surface and opposite side surfaces. The recess may be connected to a side opening in one or both sides of the floor panel, thus enabling the recess to be connected to an adjacent recess in another floor panel to form a continuous recess. The length of this continuous recess may be equal to or greater than the total length of the respective support feet of the long trough. The floor panels may thus be arranged perpendicular to the long trough.

The recess may alternatively extend partly or fully in the longitudinal direction of the floor panel. The recess may be connected to an end opening in one or both ends of the floor panel, thus enabling the recess to be connected to an adjacent recess in another floor panel to form a continuous recess. The length of this continuous recess may be equal to or greater than the total length of the respective support feet of the long trough. The floor panels may thus be arranged parallel to the long trough.

The recess may have a depth that is equal to or less than the local height of the supporting feet, thus enabling the supporting foot to contact, e.g. rest on, the bottom surface of the recces.

The recess may be arranged at a distance from the first or second end of the floor panel, or at a distance from the first or second side of the floor panel. The distance may be selected in accordance with the dimensions of the long trough. The top surface of the floor panel on both sides of the recess may remain unmodified, thereby reducing the amount of processing and material removed.

A first side surface of the recess located towards the slots may be arranged perpendicular to the bottom surface. Preferably, the first side surface may be arranged at an acute angle relative to the bottom surface so that it extends partly backwards over the bottom surface. The supporting foot of the trough element may also form an outer side surface that is arranged perpendicular or at an angle relative to the bottom surface of the recess. This outer side surface and the first side surface may be arranged parallel or at an angle to each other. This enables the trough element to be "locked" in its position and reduces the risk of failures occurring at the joint.

A second side surface of the recess located towards the first or second end or the first or second side may also be arranged perpendicular or at an angle relative to the bottom surface. The first and second side surfaces may be arranged parallel or at an angle relative to each other.

According to one embodiment, a spacing is formed between said side surface and an outer side surface of the at least one supporting foot when it is inserted into the at least one recess.
When positioned in the recess, a spacing may be formed between the outer side surface of the supporting foot and the first side surface of the recess. This spacing may be filled with a filler material, preferably a cement based filler, to secure the trough element to the floor panel. This allows for the trough elements to be secured in a fast and simple manner without the use of casting. This also seals off any spacing between the supporting feet, the bottom of the trough elements and the top side of the floor panel, thus preventing liquid or solid particles from entering this spacing.

The spacing between the outer side surface and the first side surface may be measured in the length direction of the floor panel and may be selected between 10 mm to 20 mm.

According to one embodiment, said at least one end area has a local length that is greater than the local length of an opposite end area or said side area has a local width that is greater than the local length of an opposite side area.

The recess is arranged in an end area located on the top surface of the floor panel, where this end area is arranged at the first or second end. This end area may be free of slots. The local length of this end area may preferably be greater than the local length of an end area at the opposite end. The end area at the opposite end may be shaped as a conventional end area.

Between the opposite end areas, there is an intermediate area in which a plurality of slots, e.g. elongated slots, are formed. The slots may extend from the top side to the bottom side. The slots may be arranged in one or more columns and/or rows and facilitate liquids, e.g. urine, to pass through the floor panel and into channels located below the floor panels.

One object is also achieved by a system comprising at least one long trough as described above and a plurality of floor panels as described above, wherein at least two of said floor panels are arranged side-by-side so that the at least one recesses thereof form at least one continuous recess.

The present invention also provides a system of parts comprising a plurality of floor panels as described above and one or more trough elements as described above. In the present invention, the floor panels are designed to interact with the trough elements to provide a fast and simple method of installing a long trough on a floor, e.g. a slatted floor. Unlike conventional systems, no fasteners or mounting brackets are needed to secure the trough elements. Also, no additional supporting elements made of concrete are needed to install the long trough.

The floor panel may be made of concrete, plastics, cast iron, reinforced plastic material or another suitable material. The floor panels may thus be manufactured according to standardised dimensions to fit existing stables or housing units as well as new stables or housing units. The trough elements may also be manufactured according to standardised dimensions to fit existing pens as well as new pens. This allows for easier manufacturing which in turn saves manufacturing time and costs.

The recess may be formed during manufacturing, e.g. by placement of dummy inserts during casting, or in a subsequent manufacturing step, e.g. using a cutting saw or a cutting head. This enables the floor panels to be manufactured offsite and then transported to the site. Alternatively, the recesses may be cut into the floor panels on site, but this adds to the total installation time.

According to one embodiment, at least two further floor panels are arranged end-to-end so that the end areas thereof face each other, where a first recess on one of said further floor panels is configured to receive a first supporting foot of the long trough and a second recess on the other of said further floor panels is configured to receive a second supporting foot of the long trough.

The long trough may be shaped to be positioned between two pens and under a partitioning separating the two pens. The floor panels of each pen may be arranged side-by-side in at least one row, where the recesses in the respective end areas form a continuous recess or a series of recesses. The end areas with recesses of the two rows may abut each other to enable the positioning of the trough elements. Thereby forming a first recess in one row of floor panels and a second recess in another row of floor panels. The first and second supporting feet of the trough elements may thus be positioned in these first and second recesses so that the long trough straddles over the interface between the two rows of floor panels.

Alternatively, the first and second recess may be arranged within the same end area on the floor panel, thus enabling the long trough to be installed on only one row of floor panels. The long trough may thus be arranged in just one pen.

One object is also achieved by an alternative system comprising at least one long trough as described above and a plurality of slatted floor panels as described above, wherein at least two of said slatted floor panels are arranged side-by-side so that the recesses of said two floor panels form a first recess and a second recess, where the first recess extends in the longitudinal direction of the slatted floor panels and is configured to receive a first supporting foot of the long trough, and where the second recess extends in the longitudinal direction of the slatted floor panels and is configured to receive a second supporting foot of the long trough.

In this alternative system, the floor panels are arranged side-by-side so that the side areas with the recesses are abutting each other. In the system described above, the floor panels are arranged end-to-end so that the end areas with the recesses are abutting each other. Common for both systems is that it allows for an easy positioning of the respective trough elements and thus a fast and simple installation of the long trough. The orientation of the floor panels relative to the long trough may be selected in accordance with the layout of the stable or hosing unit.

One object is also achieved by a method of installing a long trough at an installation site, comprising the steps of:
- providing a plurality of trough elements;
- further providing a plurality of slatted floor panels;
- arranging said slatted floor panels in at least a first row to form a slatted floor, where the first side of one slatted floor panel is abutting the second side of an adjacent slatted floor panel;
- positioning said trough elements relative to the slatted floor panels to form the long trough, where the first end of one trough element is abutting the second end of an adjacent trough element;
- applying a filler material at an interface between two adjacent trough elements to seal of said interface;
- wherein at least a first supporting foot of each trough element is positioned in at least a first continuous recess formed by recesses in an end area of each slatted floor panel of said first row or by a recess in a side area of said one slatted floor panel; and
- where a further filler material, preferably a cement based filler material, is at least applied at the spacing between a side surface of the first supporting feet and a side surface of the first continuous recess to secure the trough elements to the slatted floor panels.

The present invention also provides a fast and simple method of installing a long trough on a floor surface, e.g. a slatted floor, onsite. The present method allows the trough elements to be positioned directly on the floor panels without the use of fixing elements. The present method also eliminates the need for fasteners or mounting brackets for securing the trough elements to the floor panels. Furthermore, no casting is needed to install the trough elements. This significantly reduces the installation time and saves costs compared with conventional installation process.

Using the present method it takes about 15 minutes to install a long trough of 6 metres whereas it will take about 90-120 minutes using the conventional installation process.

The underlying floor structure may be prepared before the floor panels are positioned on the floor structure. This step may include, but not limit to installation of drainage channels, preparation of ground level, and applying concrete to form the finished floor structure.

The floor panels are subsequently positioned, e.g. using a crane or truck, on the floor structure to form a floor of the pens. The floor panels may be shaped as slats so that they form a slatted floor. The floor panels may be positioned using conventional techniques.

Afterwards, a trough element is initially positioned in the recesses at one end and the other trough elements are subsequently positioned end-to-end along the recesses to form the long trough. Once all trough elements have been positioned, a filler material is applied along the spacing between the supporting foot and the inner surface of the recess on both sides of the long trough. The interface between adjacent trough elements is further sealed off by applying a filler material along the interface.

Once the filler material is hardened, additional components may be installed, such as the partitioning, the feeding system, and the like.

According to one embodiment, said floor panels are further arranged in a second row where the first side of one floor panel is abutting the second side of an adjacent floor panel, wherein the end areas of the first and second rows of floor panels are abutting each other, and wherein a second supporting foot of each trough element is positioned in a second continuous recess formed by recesses in an end area of each floor panel of said second row.

The trough elements may preferably be positioned along the interface between two rows of floor panels. The trough elements are straddling over the interface so that the first supporting foot is positioned in a first recess of a floor panel and the second supporting foot is positioned in a second recess of an adjoining floor panel. The interface between the two rows of floor panels may then be sealed to prevent liquid and solid particles from entering the spacing below the long trough.

If the first and second recesses are arranged on the same floor panel, then only one row of floor panels with recesses is positioned on the floor structure. The long trough may then be installed in the same manner as described earlier.

In an alternative embodiment, a second supporting foot of each trough element is positioned in a second continuous recess formed by a recess in a side area of said adjacent slatted floor panel.

The trough elements may also be positioned along the interface between two adjacent columns of floor panels. Similarly, the trough elements are straddling over this interface which may then be sealed to prevent liquid and solid particles from entering the spacing below the long trough.

According to one embodiment, the trough elements are resting only on the first supporting feet and optional second supporting feet.

The trough element may preferably rest only on the supporting feet, thus the dimensions of the recess may be reduced. Unlike conventional trough element which rest on the bottom part of the trough element, which requires a large recess in the supporting element in order to receive the entire bottom part as mentioned in DK 180244 B1. This saves manufacturing time and costs.

The recess may be formed using dummy inserts during casting of the floor panel. The dummy inserts may then be removed afterwards. Alternatively, a cutting head or cutting saw may be used to cut the recess into the floor panel in a subsequent processing step.

The present invention is suited for feeding pigs, preferably piglets or porkers/finishers. However, the present invention may also be used for feeding other animals, such as cattle, sheep, etc.

The present invention is suited for onsite installation of the long trough at an installation site. The installation site may be a traditional stable, a housing unit or a round arch stable. Other stable or housing constructions may also be used. The traditional stable may comprise a concrete or masonry based outer wall, e.g. an in-situ wall or an insulated wall panel, which is suitable for directly mounting the partitioning onto the outer wall using a wall bracket. The housing unit and/or round arch stable may comprise a facade or sandwich panel where a stabilizer unit is needed for mounting the partitioning.

The present invention also relates to a long trough for mounting between two pens, extending in a longitudinal direction from a first end to a second end, further in a width direction from a first side to a second side, and further in a height direction from a top side to a bottom side and opposite sides, wherein the long trough is formed by at least one trough element made of polymer concrete, each trough element further has a bottom surface, wherein at least one mounting element is integrally formed in or embedded in said at least one wall element, wherein said at least one mounting element is configured for mounting of a partitioning, a post, a stabilator, an end element or a component thereof. Preferably, the at least one trough element comprises at least one wall element extending in the width direction, wherein the at least one trough element and said at least one wall element are integrated together to form a single piece. Preferably, the at least one wall element has an increased local thickness compared to a local thickness of a respective side wall element of the trough element.

### Description of the Drawing

In the following, the invention will be explained in more detail with reference to the enclosed drawing showing an embodiment example of a long trough according to the invention, and wherein:
- Fig. 1: shows a perspective view of a prior art long trough;
- Fig. 2: shows a side view of a prior art trough element with a bottom block;
- Fig. 3: shows a side view of a prior art trough element with integrated side platforms;
- Fig. 4: shows a top view of a first embodiment of a floor panel with slots according to the invention;
- Figs. 5a-b: shows two embodiments of a slatted floor formed by the floor panels;
- Fig. 6: shows a first embodiment of a trough element according to the invention positioned on two adjacent floor panels;
- Fig. 7: shows the trough element positioned on a second embodiment of the floor panel;
- Fig. 8: shows a second embodiment of the trough element; and
- Fig. 9: shows a top view of a trough element with mounting elements.

### Reference numbers

- 1: Long trough
- 2: Partitioning
- 3: Feeding system
- 4: First side
- 5: Second side
- 6: Top side
- 7: Bottom side
- 8: End walls
- 9: Intermediate walls
- 10: Inner surface
- 11: Outer surface
- 12: Bottom block
- 13: Side platforms
- 14: Slot
- 15: Opening
- 16: Floor panel
- 17: First end
- 18: Second end
- 19: First side
- 20: Second side
- 21: End area
- 22: Recess
- 23: End area
- 24: Intermediate area
- 25: Slots
- 26: Slatted floor
- 27: Trough element
- 28: First supporting foot
- 29: Second supporting foot
- 30: Outer surface
- 31: First side surface
- 32: Second side surface
- 33: Bottom surface
- 34: Filler material
- 35: Internal spacing
- 36: Inner surfaces
- 37: Bottom surface
- 38: Top surface
- 39: Opening
- 40: Slot
- 41: Impression
- 42: Mounting holes
- h: Local height

### Detailed Description of Embodiments of the Invention

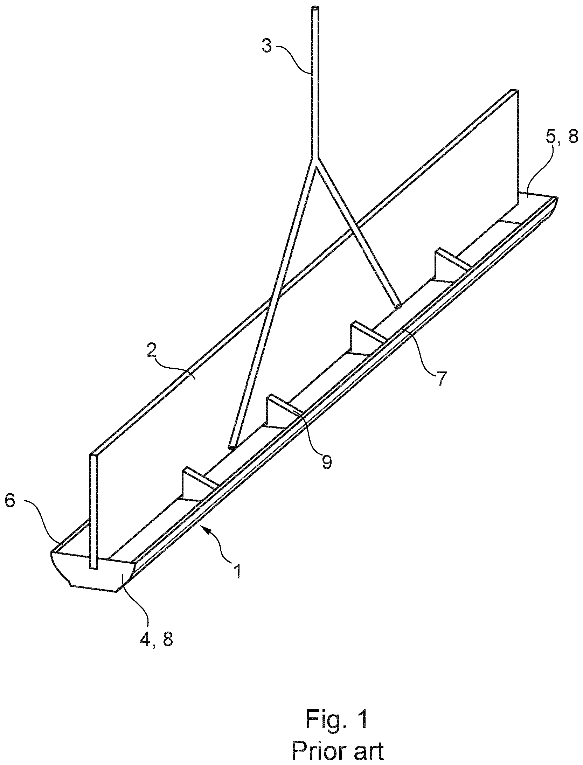

Fig. 1 shows a prior art long trough 1 configured to be positioned under a partitioning 2 separating two pens, where the animals, e.g. pigs, in both pens are able to eat from the same long trough. On the partitioning 2 is mounted a feeding system 3 for distributing of the feed stuff into the long trough 1. The feed stuff is introduced into a vertical feed pipe which is branched into two pipes that each has an end opening located immediately over the long trough 1.

The long trough 1 had a body extend in a longitudinal/length direction from a first end 3 to a second end 4 and further in a width direction from a first side 5 to a second side 6. The body further defines a top side 6 and a bottom side 7 of the long trough.

Here, the long trough 1 is made of polymeric concrete and formed by separate elongated trough elements.

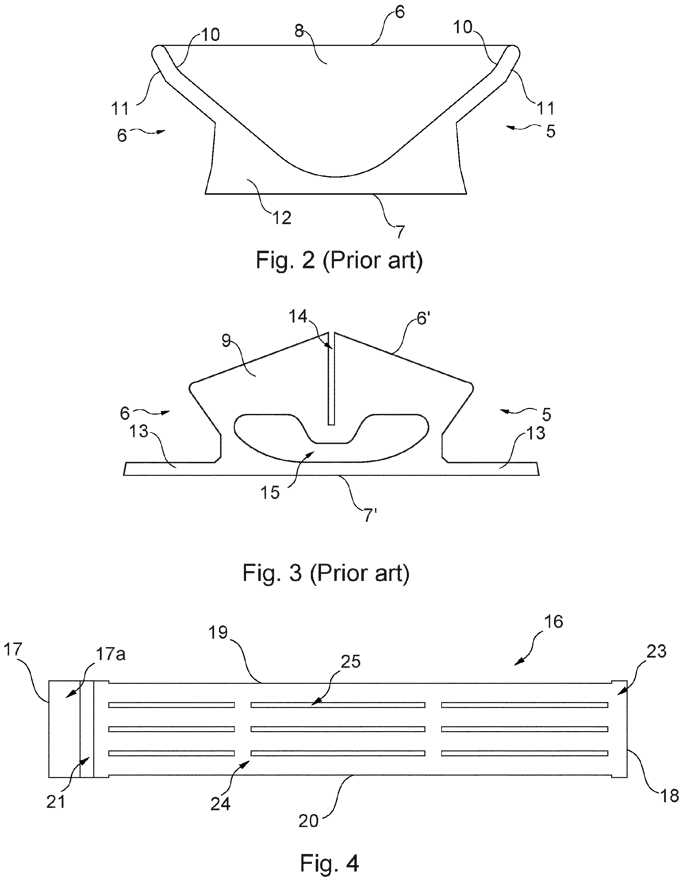

Fig. 2 shows a prior art trough element with an end wall 8 seen from the opposite open end. The trough element has an inner surface 10 for receiving and holding the feed stuff. The trough element further has an outer surface 11 from which a bottom block 12 projects in a height direction. The bottom block 12 forms a bottom surface defining the bottom side 7 of the trough element.

Fig. 3 shows a side view of another prior art trough element with an intermediate wall 9, where side platforms 13 project outwards from both sides 4, 5 of the trough element. The side platforms 13 are aligned with the bottom block 12 to form a continuous bottom surface, thus forming a large bottom side 7'.

The intermediate wall 9 forms a tapered top side 6' projecting in the height direction, in which a slot 14 is arranged. The slot 14 is adapted to receive and hold the partitioning 2. An opening 15 is further arranged between the intermediate wall 9 and the inner surface 10 for enabling an easy feet stuff distribution along the length of the long trough.

In both fig. 2 and fig. 3, the trough element is intended to rest solely on the bottom surface. During installation, the work must compensate for any tolerances or variations between the bottom surface and the adjoining floor surface. This increases the installation time and costs.

Fig. 4 shows a first embodiment of a floor panel 16 according to the invention. The floor panel 16 extends in a length direction from a first end 17 to a second end 18 and further in a width direction from a first side 19 to a second side 20.

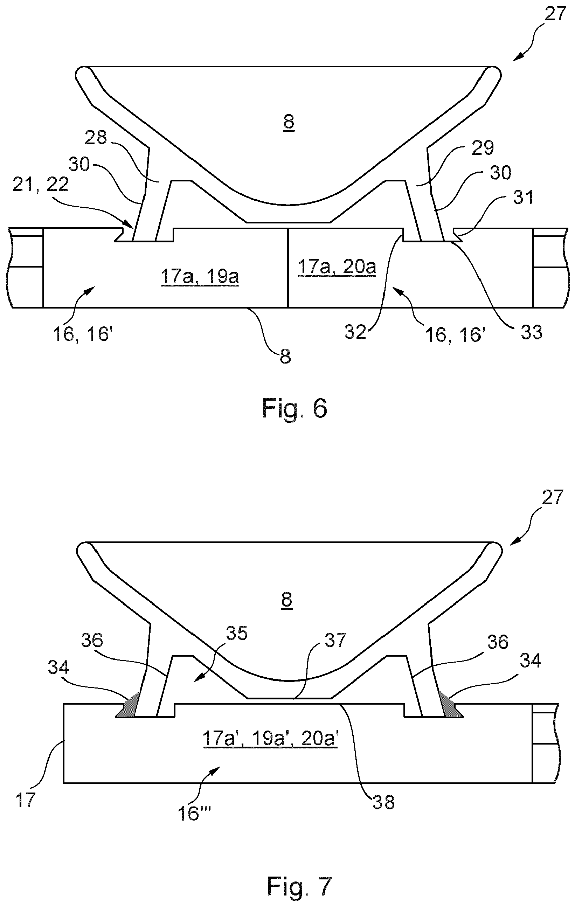

The floor panel 16 has an end area 17a located at one end, e.g. the first end 17, in which a recess 21 is arranged. The recess 21 is configured to receive a supporting foot of a trough element (shown in figs. 6-7) according to the invention. The floor panel 16 further has another end area 23 located at the opposite end, e.g. the second end 18.

Between the end areas 17a, 23 is an intermediate area 24 in which a plurality of slots 25, e.g. elongated slots, are formed. The slots 25 extend from a top surface (shown in fig. 7) to a bottom surface (shown in fig. 6) of the floor panel 16. The slots 25 are intended to guide liquids, e.g. urine, trough the floor panel 16 and further into a drainage channel (not shown).

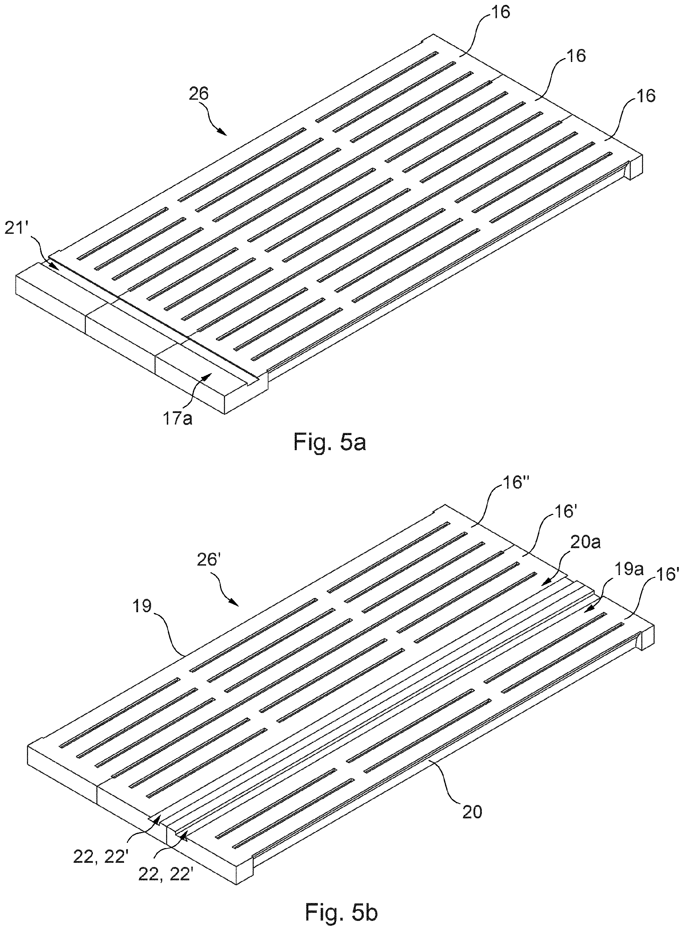

Fig. 5a shows a slatted floor 26 formed by a plurality of floor panels 16 arranged side-by-side in at least one row, e.g. a first row. The floor panels 16 are orientated in the same direction so that the recesses 21 thereof form a continuous recess 21' as illustrated in fig. 5a.

The slatted floor 26 optionally further comprises a second row of floor panels 16 arranged side-by-side (not shown), where the floor panels are also orientated in the same direction so that the recesses 21 thereof form another continuous recess 21'.The two rows of floor panels are orientated end-to-end so that the end areas 17a thereof are abutting each other as illustrated in fig. 6.

Fig. 5b shows an alternative slatted floor 26' formed by a plurality of floor panels 16', 16" arranged side-by-side, where two adjacent floor panels 16' each comprise a side area 19a, 20a located at one side. Here, the side area 19a is located at the first side 19 on one floor panel 16' while the side area 20a is located at the second side 20 on the other floor panel 16'. The two floor panels 16' may have an identical configuration.

The two floor panels 16' are orientated so that the two side areas 19a, 20a are abutting each other as illustrated in fig. 5b. One or more further floor panels 16" without a recess 22 are arranged on one or both sides of the two floor panels 16' as illustrated in fig. 5b. Although not shown in fig. 5b, the further floor panels 16" may be sandwiched between two floor panels 16' oriented in opposite longitudinal directions so that the recesses 22 face in opposite directions.

Another row of floor panels 16', 16" may be arranged end-to-end with the row of floor panels 16', 16" illustrated in fig. 5b so that the recesses 22 each form a continuous recess 22'.

Fig. 6 shows a first embodiment of a trough element 27 according to the invention positioned on two adjacent floor panels 16. Fig. 7 shows the trough element 27 positioned on a second embodiment of the floor panel 16"'. The end area 17a or the side area 19a, 20a may comprise a single recess as illustrated in fig. 6 or two recesses as illustrated in fig. 7.

The trough element 27 comprises a first supporting foot 28 and a second supporting foot 29, both projecting from the outer surface 11. The supporting feet 28, 29 projects beyond a bottom surface (shown in fig. 7) of through element 27 and is shaped to be positioned in the recess 21, 22 of the floor panel 16 as illustrated in figs. 6-7. Each supporting foot 28, 29 has an outer surface 30 facing a first side surface 31 of the recess 22.

The recess 21, 22 further has an opposite second side surface 32 and a bottom surface 33. The first side surface 31 is here placed at an angle relative to the bottom surface 33. The second side surface 32 may also be angled or placed perpendicular to the bottom surface 33 as illustrated in figs. 6-7. The recess 21 has a greater local width measured in the length direction of the floor panel 16 than the local thickness of the supporting foot 28, 29 measured in the width direction of the trough element 27. The recess 22 has a greater local width measured in the width direction of the floor panel 16' than the local thickness of the supporting foot 28, 29.

Once the trough element 27 is positioned on the floor panel 16' or floor panels 16, a spacing is formed between the first side surface 31 of the recess 21, 22 and the outer surface 30 of the supporting foot 28, 29 as illustrated in figs. 6-7. This spacing is filled with a filler material 34, e.g. a cement based filler, for securing the trough element 27 to the floor panel 16, 16' and to seal off the internal spacing 35 under the trough element 27. The internal spacing is defined by the inner surfaces 36 of the supporting feet 28, 29, the bottom surface 37 of the trough element 27 and the top surface 38 of the floor panel 16, 16'.

As illustrated in figs. 6-7, the bottom surface 38 of the through element 27 is spaced apart from the top surface 38 of the floor panel 16, 16'. The trough element 27 thus merely rests on the support feet 28, 29. This saves material for the bottom part of the trough element, thereby reducing the weight of the trough element.

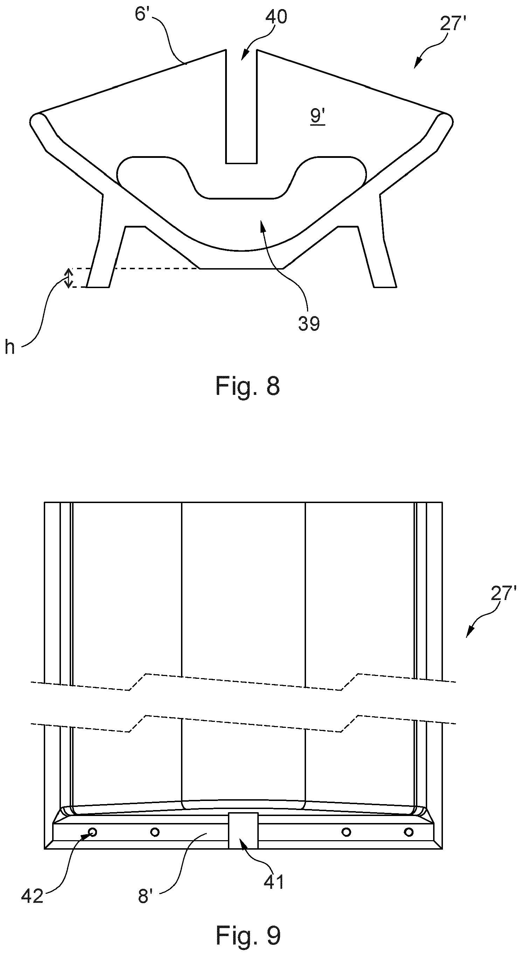

Fig. 8 shows a second embodiment of the trough element 27' where an opening 39 is arranged between the intermediate wall 9' and the inner surface 10 of the trough element 27'. The opening 39 is configured to enable an easy feed stuff distribution along the length of the long trough 1.

The intermediate wall 9' projects beyond the side edges of the body of the trough element 7'. Here, the height of the intermediate wall 9' increases from the side edges towards a centreline of the trough element 27'. A slot 40 is arranged in the top side 6' of the intermediate wall 9' for receiving the partitioning 2. The end wall 8 optionally has a similar top side 6' design.

As illustrated in fig. 8, the supporting feet 28, 29 has a local height, h, measured between the bottom surface 37 of the trough element 27' and a free end surface of the supporting feet 28, 29. This local height 'h' is greater than the local depth of the recess 22. The local depth is measured between the top surface 38 and the bottom surface 33.

Fig. 9 shows a top view of the trough element 27" where the end wall 8' has an increased local thickness compared to the local thickness of the side walls. Here, a number of mounting elements is integrally formed in the end wall 8' for later mounting of additional components.

The mounting element may in example be a negative impression 41 for the placement of a bracket or post. Alternatively, the impression 41 may be shaped as a recess intended to receive the partitioning 2, e.g. an end portion thereof. The mounting element may also be mounting holes 42 for mounting of a bracket, e.g. a wall bracket or a floor bracket.

Alternatively or additionally, the intermediate walls 9 also comprise one or more mounting elements.

## Claims

1. A long trough for mounting between two pens, extending in a longitudinal direction from a first end to a second end, further in a width direction from a first side to a second side, and further in a height direction from a top side to a bottom side and opposite sides, wherein the long trough is formed by at least one trough element made of polymer concrete, each trough element further has a bottom surface and at least one supporting foot projecting from an outer surface of that trough element towards the bottom side, the at least supporting foot further extends in the longitudinal direction, **characterised in that** said at least one supporting foot projects beyond the bottom surface in the height direction and is configured to be positioned in at least one recess on at least one slatted floor panel, when installed, so that the at least one supporting foot is resting on a bottom of the at least one recess.

2. The long trough according to claim 1, **characterised in that** the at least one supporting foot has a free end surface and a local height measured between said bottom surface and said free end surface, wherein said local height is greater than a local depth of said at least one recess of the at least one slatted floor panel.

3. The long trough according to claim 1 or 2, **characterised in that** a first supporting foot is arranged on said first side of the at least one trough element and a second supporting foot is arranged on said second side of the at least one trough element.

4. The long trough according to any one of claims 1 to 3, characterised the at least one trough element comprises at least one wall element extending in the width direction, wherein the at least one trough element and said at least one wall element are integrated together to form a single piece.

5. The long trough according to claim 4, **characterised in that** at least one mounting element is integrally formed in or embedded in said at least one wall element, wherein said at least one mounting element is configured for mounting of a partitioning, a post, a stabilator, an end element or a component thereof.

6. A slatted floor panel configured to form part of a slatted floor and configured to interact with the long trough according to any one of claims 1 to 5, the slatted floor panel extends in a longitudinal direction from a first end to a second end and further in a width direction from a first side to a second side, the slatted floor panel further has a top side and a bottom side, wherein the slatted floor panel comprises at least one end area and a plurality of slots extending from said top side to said bottom side, **characterised in that** at least one recess extending in the width direction is arranged in said at least one end area or at least one recess extending in the longitudinal direction is arranged in a side area, wherein said at least one recess is positioned at a distance from the first or second end or the first or second side and is configured to receive the at least one supporting foot of the long trough.

7. The slatted floor panel according to claim 6, **characterised in that** the at least one recess has a bottom surface and a side surface located towards the slots, wherein said side surface is arranged perpendicular or in acute angle relative to the bottom surface.

8. The slatted floor panel according to claim 7, **characterised in that** a spacing is formed between said side surface and an outer side surface of the at least one supporting foot when it is inserted into the at least one recess.

9. The slatted floor panel according to any one of claims 6 to 8, **characterised in that** said at least one end area has a local length that is greater than the local length of an opposite end area, or said side area has a local width that is greater than the local length of an opposite side area.

10. A system comprising at least one long trough according to any one of claims 1 to 5 and a plurality of slatted floor panels according to any one of claims 6 to 9, wherein at least two of said slatted floor panels are arranged side-by-side so that the at least one recesses thereof form at least one continuous recess extending in the width direction of the slatted floor panels.

11. The system according to claim 10, **characterised in that** at least two further slatted floor panels are arranged end-to-end so that the end areas thereof face each other, where a first recess on one of said further slatted floor panels is configured to receive a first supporting foot of the long trough and a second recess on the other of said further slatted floor panels is configured to receive a second supporting foot of the long trough.

12. A system comprising at least one long trough according to any one of claims 1 to 5 and a plurality of slatted floor panels according to any one of claims 6 to 9, wherein at least two of said slatted floor panels are arranged side-by-side so that the recesses of said two floor panels form a first recess and a second recess, where the first recess extends in the longitudinal direction of the slatted floor panels and is configured to receive a first supporting foot of the long trough, and where the second recess extends in the longitudinal direction of the slatted floor panels and is configured to receive a second supporting foot of the long trough.

13. A method of installing a long trough at an installation site, comprising the steps of:
- providing a plurality of trough elements;
- further providing a plurality of slatted floor panels;
- arranging said slatted floor panels in at least a first row to form a slatted floor, where the first side of one slatted floor panel is abutting the second side of an adjacent slatted floor panel;
- positioning said trough elements relative to the slatted floor panels to form the long trough, where a first end of one trough element is abutting a second end of an adjacent trough element;
- applying a filler material at an interface between two adjacent trough elements to seal of said interface;
**characterised in that**
- at least a first supporting foot of each trough element is positioned in at least a first continuous recess formed by recesses in an end area of each slatted floor panel of said first row or by a recess in a side area of said one slatted floor panel; and
- where a further filler material, preferably a cement based filler material, is at least applied at the spacing between a side surface of the first supporting feet and a side surface of the first continuous recess to secure the trough elements to the slatted floor panels.

14. The method according to claim 13, **characterised in that** said slatted floor panels are further arranged in a second row where the first side of one slatted floor panel is abutting the second side of an adjacent slatted floor panel, wherein the end areas of the first and second rows of slatted floor panels are abutting each other, and wherein a second supporting foot of each trough element is positioned in a second continuous recess formed by recesses in an end area of each slatted floor panel of said second row.

15. The method according to claim 13 or 14, **characterised in that** the trough elements are resting only on the first supporting feet and optional second supporting feet.
